Europäisches Patentamt

European Patent Office

Office européen des brevets

(19)

(11) **EP 0 667 595 B1**

(12) **FASCICULE DE BREVET EUROPEEN**

(45) Date de publication et mention
de la délivrance du brevet:
**21.12.2005   Bulletin 2005/51**

(51) Int Cl.$^7$: **G06T 11/00**

(21) Numéro de dépôt: **95400238.2**

(22) Date de dépôt: **03.02.1995**

(54) **Procédé de génération d'images texturées et d'effets spéciaux en vidéo**

Verfahren zur Erzeugung texturierter Bilder und Spezialvideoeffekte

Method for generating textured images and special video effects

(84) Etats contractants désignés:
**DE FR GB IT**

(30) Priorité: **04.02.1994   FR 9401269**

(43) Date de publication de la demande:
**16.08.1995   Bulletin 1995/33**

(73) Titulaire: **THOMSON BROADCAST SYSTEMS**
**95800 Cergy Saint-Christophe (FR)**

(72) Inventeurs:
• **Rebiai, Mohamed**
**F-92050 Paris la Défense (FR)**
• **Pavie, Hugues**
**F-92050 Paris la Défense (FR)**

(74) Mandataire: **Ruellan-Lemonnier, Brigitte**
**Thomson,**
**European Patent Operations,**
**46 Quai Alphonse Le Gallo**
**92648 Boulogne Cedex (FR)**

(56) Documents cités:
**EP-A- 0 321 291**          **EP-A- 0 473 152**
**WO-A-91/19280**          **GB-A- 2 176 678**

• **EARSEL ADVANCES IN REMATE SENSING, vol. 1, FRANCE, page 136 BRIVIO ET AL. 'fractal based technique dor mountain relief reconstruction'**
• **SECOND INTERNATIONAL CONFERENCE ON COMPUTER AIDED DESIGN AND COMPUTER GRAPHICS, CHINA, page 31 NAI-LIANG ZHAO ET AL. 'an aproach to the synthesis on realistic terrain'**
• **COMPUTER GRAPHICS 88, UK, page 95 PETRIC 'terrain modelling using fractal interpolation functions'**

**Description**

La présente invention concerne un procédé de génération d'images texturées en vidéo, plus particulièrement un procédé permettant de générer des textures en temps réel vidéo en vue d'effectuer des effets spéciaux dans des séquences d'images vidéo.

Les effets spéciaux et notamment la synthèse d'images sont bien connus dans le domaine du cinéma. Toutefois, dans le domaine de la télévision, les effets spéciaux sont plus particulièrement limités aux incrustations, aux déformations d'images ou aux enchaînements évolués. Or, l'on rencontre aussi dans le domaine de la télévision, la nécessité de devoir créer un certain nombre d'images (ou séquences) de synthèse et notamment des images texturées. Toutefois, dans les matériels vidéo professionnels, la synthèse de texture n'apparaît pour l'instant que sous la forme de motifs grossiers et répétitifs. Elle n'est utilisée que pour générer des fonds d'image sur lesquels on effectue des incrustations.

Dans le domaine de l'analyse de terrain, il est connu d'utiliser des fonctions d'interpolation fractale à base de spline pour interpoler la structure d'un terrain (voir notamment l'article de NAI-LIANG ZHAO et A « An approach to the synthesis on realistic terrain » Second International Conférence on Computer aided design and Computer Graphics page 31, China.

La présente invention a donc pour but de proposer un nouveau procédé de génération d'images texturées en vidéo qui permet de générer un ensemble relativement vaste de textures qui puissent être incrustées dans une image vidéo ou utilisées comme clé de mélange d'un enchaînement en vue de générer des séquences à des fins artistiques ou publicitaires.

La présente invention a aussi pour but de proposer un nouveau procédé de génération d'images texturées en vidéo qui permet de générer des textures, telles que des textures de tissus, de marbre, d'effets atmosphériques (nuage, brouillard), d'habillage de scènes ou de studios en utilisant un même procédé de génération de textures.

La présente invention a encore pour but de proposer un procédé de génération d'images texturées en vidéo qui soit complètement paramétrable de manière à pouvoir modifier l'aspect ou le grossissement des textures afin de générer des séquences animées.

La présente invention a surtout pour but de proposer un nouveau procédé de génération d'images texturées en vidéo qui puisse synthétiser une texture en temps réel vidéo, c'est-à-dire aux fréquences de 25 images/s, 30 images/s ou autres.

En conséquence, la présente invention a pour objet un procédé de génération d'images texturées en vidéo, comportant une étape de génération d'une texture microscopique à partir des paramètres-utilisateur avec une fonction d'interpolation fractale générant un signal fBm « fractional Brownian motion », les images générées ayant une taille LxW, W étant le nombre de points par ligne et L le nombre de lignes actives.

Selon le procédé, l'on découpe l'image en Ndc = Bl x Bh blocs de taille dl x dh pixels, Bl représentant le nombre de blocs en largeur et Bh le nombre de blocs en hauteur et la fonction fractale est définie par :

$$F(x,y) = \sum_{k=0}^{N} r^{-kH} \, Sp \ln (r^k x, r^k y)$$

dans laquelle $r > 1$, r désignant la lacunarité ou facteur d'irrégularité,

H = (3-D) où D est la dimension fractale désirée,

$N$ est un paramètre fixé pour avoir une définition au pixel ou point-image près, et $Spln(x,y)$ est l'interpolation par B-spline au point de coordonnées réelles $(x,y)$ d'un maillage de points générés aux coordonnées entières.

La présente invention a aussi pour objet un procédé, caractérisé en ce qu'il comporte de plus une étape de génération d'un motif recevant en entrée l'image de la fonction fractale et des paramètres-utilisateur saisis sur une interface utilisateur à partir d'un écran informatique ou d'un pupitre spécialisé et donnant en sortie une texture macroscopique.

Cette étape est particulièrement utile pour générer des textures de type tissu ou marbre par exemple. Cette étape permet d'obtenir en sortie l'image d'une texture à plat, c'est-à-dire non plaquée sur une surface. En sortie de cette étape, on peut soit obtenir le dessin du motif macroscopique de la texture, soit dupliquer le motif macroscopique de la texture. Il est encore possible d'introduire la fonction fractale comme bruit de phase sur le motif ou d'introduire la fonction fractale comme bruit additif sur l'image. Cette étape permet aussi de réaliser, par exemple, un tissage de deux motifs de fils et la génération des couleurs.

Selon encore une autre caractéristique de la présente invention, le procédé comporte de plus une étape de rééchantillonnage permettant de réaliser un placage ou « mapping » de l'image texturée sur une surface.

Selon encore une autre caractéristique de la présente invention, on ajoute dans l'image un effet de profondeur en atténuant la luminosité du point de la surface en fonction de sa distance par rapport au point de visualisation.

D'autres caractéristiques et avantages de la présente invention apparaîtront à la lecture de la description d'au moins un mode de réalisation préférentiel faite ci-après avec référence aux dessins ci-annexés dans lesquels:

- la figure 1 est un schéma expliquant les méthodes fractale ;
- la figure 2 représente le découpage d'un écran, tel qu'un écran de télévision pour la mise en oeuvre d'une fonction fractale ;
- la figue 3 représente schématiquement l'étape de génération d'un motif à partir de deux primitives, conformément à la présente invention;
- les figures 4A à 4C sont des schémas expliquant l'étape de placage d'une texture sur une surface conformément à la présente invention;
- les figures 5A à 5B sont des schémas expliquant la mise en relief de textures, tels que des nuages ;
- la figures 6 est un schéma du circuit réalisant la fonction Spln ;
- la figure 7 est une représentation schématique de l'étage générant la fonction fractale ;
- les figures 8 et 9 représentent les circuits séquenceur et pondérateur de la figure 7 ;
- la figure 10 est une représentation schématique de l'étage de génération du motif ;
- les figures 11 et 12 représentent les circuits séquenceur et pondérateur de la figure 10 ;
- la figure 13 est une représentation schématique de l'étage de rééchantillonnage ;
- les figures 14 et 15 représentent les circuits "Projection" et "Atténuation sur la profondeur" de la figure 13, et
- les figures 16 et 17 représentent les circuits "Calcul de paramètres de mise en relief" et "Bloc de calcul de l'intégrale" de la figure 13.

Le procédé de génération d'images texturées en vidéo, conforme à la présente invention, comporte une première étape de génération d'une texture microcospique à partir de paramètres-utilisateur. En effet, l'image d'une scène donne deux types d'informations, à savoir les contours délimitant des zones de l'image et la nature de la surface contenue dans chaque zone. Ce dernier type d'informations est appelé texture et renseigne sur les relations liant les différentes zones de l'image. D'autre part, l'ensemble des textures est communément séparé en deux classes : les textures macroscopiques et les textures microscopiques. Les textures macroscopiques se caractérisent par des primitives locales ou motifs de base qui s'organisent spatialement selon des règles connues tandis que les textures microscopiques se caractérisent par une structure stochastique qui régit le placement et la couleur des pixels selon des lois probabilistes.

Il existe de nombreux algorithmes permettant de synthétiser des textures microscopiques. Toutefois, ces algorithmes connus de l'homme de l'art permettent en général de ne réaliser que certains types de texture. Ainsi, les textures présentant de fortes orientations ou régularités telles que des textures à rayures, des textures simulant du papier ou des textiles pouvant se modèliser par des champs de Markov. L'inconvénient de cette méthode réside dans sa complexité due à sa structure itérative. Certaines autres textures simulant par exemple du sable ou du gazon peuvent être obtenues à l'aide de modèles auto-régressifs. Ces méthodes présentent l'inconvénient de ne pas être toujours stables.

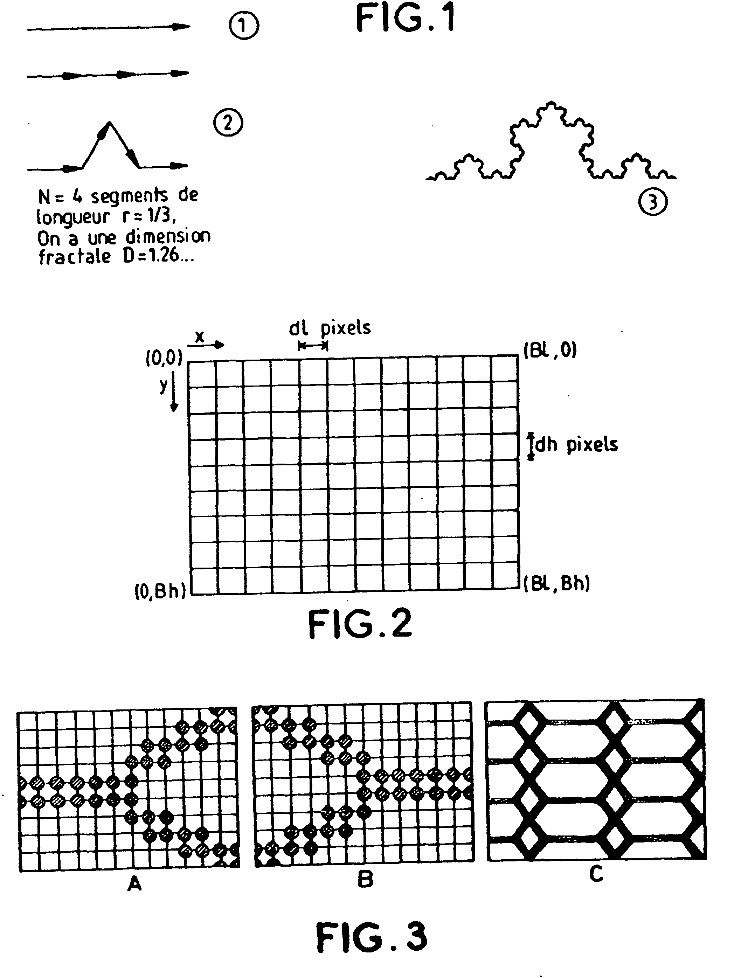

Pour générer des textures d'objets naturels tels que des nuages ou du brouillard, il est connu d'utiliser les méthodes fractales. Une fractale est une structure qui présente des similitudes à tous les niveaux d'échelle. De ce fait, si l'on fait un grossissement de la structure, on retrouve le même motif au niveau d'échelles inférieures. Une fractale est caractérisée par sa dimension fractale que l'on peut comparer à la dimension topologique. Ainsi, une droite a une dimension topologique de 1 et un plan une dimension de 2. En comparaison, une structure fractale à un paramètre aura une dimension fractale entre 1 et 2 selon qu'elle remplit plus ou moins le plan. Ceci est représenté, par exemple, à la figure 1 qui donne une construction de structure fractale : si l'on coupe le segment référencé 1 en trois segments de longueur 1/3 et que l'on remplace le segment du milieu par deux autres segments de longueur 1/3, l'on obtient la structure référencée 2. Si maintenant on répète ce processus, pour chaque nouveau segment et ceci à tous les niveaux d'échelle, on obtient la structure référencée 3. Cette structure présente, de par sa construction, des similitudes à tous les niveaux d'échelle et une dimension de 1,2.

Le procédé de génération d'images texturées en vidéo, conforme à la présente invention, utilise une fonction d'interpolation fractale spécifique qui permet de générer une texture microscopique en temps réel tout en respectant la qualité de l'image, notamment d'une image haute définition. Cette fonction fractale doit aussi pouvoir réaliser plusieurs types de texture de base tels que des textures naturelles de type brouillard, nuage ou similaire, des textures du type tissu, marbrure ou similaire et des textures constituées par des motifs géométriques se répétant à tous les niveaux d'échelle.

En conséquence, la fonction d'interpolation fractale utilisée est une fonction Fbm (Fractional Brownian motion) et elle est définie plus particulièrement par la formule suivante :

$$F(x,y) = \sum_{k=0}^{N} r^{-kH} \, Spln\,(r^k x,\, r^k y) \qquad (1)$$

avec $r > 1$ : lacunarité ou facteur d'irrégularité,

$H = (3 - D)$ où $D$ est la dimension fractale désirée,

$N$ paramètre fixé pour avoir une définition au pixel ou point-image près, et

$Spln(x,y)$ : l'interpolation par B-spline au point de coordonnées réelles $(x,y)$ d'un maillage de points générés aux coordonnées entières. Les valeurs de ces points de maillage seront de type aléatoire ou déterministe suivant la fractale recherchée.

Conformément à la présente invention, la fonction $F0$ doit être définie de façon à pouvoir générer des images de taille $W \times L$, $W$ étant le nombre de points par ligne, et $L$ le nombre de lignes actives. Dans le cadre de la présente invention qui consiste à générer des images en vidéo, l'image pourra avoir une taille de 720 x 576 jusqu'à la haute définition 1920 x 1250. Pour obtenir ce domaine de définition, on découpe l'écran en $Nbc = Bl \times Bh$ blocs de taille dl x dh pixels, $Bl$ représentant les blocs en largeur et $Bh$ des blocs en hauteur comme représenté sur la figure 2. Dans ce cas, les coins des blocs forment alors $Npt = (Bl + 1) \times (Bh + 1)$ points de coordonnées entières de $(0,0)$ à $(Bl, Bh)$ comme représenté sur la figure 2. Ainsi, pour un point $(x_i, y_i)$ de l'écran avec $x_i$ appartenant à l'espace $[0, W - 1]$, $y_i$ appartenant à $[0, L - 1]$, on calcule $F(x,y)$ avec :

$$x = Bl.\frac{x_i}{W} = \frac{x_i}{dl} \; et \; y = Bh.\frac{y_i}{L} = \frac{y_i}{dh} \qquad (2)$$

On peut donc définir la fonction $Spln0$ en connaissant les valeurs aux $Npt$ points de coordonnées entières $((0,0)$ à $(Bl, Bh))$.

D'après la formule (1), on doit calculer $Spln\,(r^k x, r^k y)$ avec $r > 1$ et $k > 0$. De ce fait, on dépasse le domaine de définition de $Spln0$ qui est $[0, Bl] \times [0, Bh]$. Pour ce faire, on prolonge le domaine de définition de $Spln0$ en la rendant périodique en $x$ et en $y$, et en conséquence :

$Spln\,(Bl, i) = Spln\,(O, i)$ pour tout $i \in [0, Bh]$
$Spln\,(j, Bl) = Spln\,(j, O)$ pour tout $j \in [0, Bl]$
et :
$Spln\,(x, y) = Spln\,(x + k*Bl, y + l * Bh) \; \forall \; k \; et \; l \in N$

Pour le calcul de $Spln\,(r^k x, r^k y)$, il suffit de rapporter les valeurs du couple $(r^k x, r^k y)$ dans l'ensemble $[0, Bl] \times [0, Bh]$.

D'autre part, pour obtenir des textures microscopiques les plus uniformes possible, notamment lorsqu'il s'agit de brouillard et de nuage, la fonction $Spln0$ choisie est une fonction $Spln0$ cubique. Dans ce cas, on utilise une fonction d'interpolation sur 16 points de manière à éviter toute cassure dans l'image. Ainsi, le calcul de la valeur en un point $P_{xy}$ se définit par :

$$Spln\,(P_{xy}) = X^T M^T_B \begin{bmatrix} P00 & P10 & P20 & P30 \\ P01 & P11 & P21 & P31 \\ P02 & P12 & P22 & P32 \\ P03 & P13 & P23 & P33 \end{bmatrix} M_B Y \qquad (3)$$

avec

$$X = \begin{bmatrix} 1 \\ x^1 \\ x^2 \\ x^3 \end{bmatrix} \quad \text{et} \quad Y = \begin{bmatrix} 1 \\ y^1 \\ y^2 \\ y^3 \end{bmatrix}$$

et $M_B$, la matrice permettant le calcul des coefficients du polynôme bi-cubique.

De préférence, $M_B$ peut être donnée par :

$$M_B = \frac{1}{6} \begin{bmatrix} 1 & -3 & 3 & -1 \\ 4 & 0 & -6 & 3 \\ 1 & 3 & 0 & 1 \\ 0 & 0 & 0 & 1 \end{bmatrix}$$

Si l'on prend les notations suivantes :

$$P = \begin{bmatrix} P00 & P10 & P20 & P30 \\ P01 & P11 & P21 & P31 \\ P02 & P12 & P22 & P32 \\ P03 & P13 & P23 & P33 \end{bmatrix}$$

$$U = M_B X$$

et

$$V = M_B Y$$

Alors (3) s'écrit :

$$Spln(P_{x,\ y}) = U^T P V$$

où l'opérateur $^T$ signifie transposé.

En effectuant un maillage de l'écran en *Npt* points, l'on obtient un ensemble de *Nbc* matrices *P*, qui sont stockables dans un tableau *P*[ ] de dimension *Nbc.*

Dans ce cas, l'indice *I* dans le tableau *P*[ ] de la matrice à sélectionner pour un point $(x_i,\ _{yi})$ de l'écran se calcule de la façon suivante

$$I = (x_i \ div \ dl) + Bl \times (y_i \ div \ dh)$$

où l'opérateur "*div*" signifie division entière.

Définie comme ci-dessus, la distance entre $P_{11}$ et $P_{21}$ est de *dl* pixels et celle entre $P_{11}$ et $P_{12}$ est de *dh* pixels. Le vecteur *X* ne peut donc prendre que *dl* valeurs et le vecteur *Y* que *dh* valeurs. Il est alors possible de pré-calculer les *dl* vecteurs *U* ainsi que les *dh* vecteurs *V* de façon à ce que le calcul de *Spln0* en un point ne nécessite que la pré-multiplication de la matrice *P* par le vecteur *U* et la multiplication du résultat par le vecteur *V*.

Concernant les paramètres *N* et *r* de la fonction (1), *N+1* définit le nombre de calculs de *Spln0* que l'on peut effectuer en parallèle et la lacunarité *r* détermine la progression géométrique dans l'espace des fréquences. Or, dans les plus hautes fréquences, les échantillons de *Spln0* ne peuvent être de taille inférieure à *Bl* x *Bh* pixels pour éviter les effets de repliement, car *Spln0* est une interpolation par B-spline d'un maillage de *Bl* x Bh points. D'autre part, *N* est directement lié à *r*.

En effet, d'après les relations (1) et (2), un échantillon de *Spln0* de largeur *Bl* se spécifie de la façon suivante :

$$r^N x = 1 \quad \text{pour} \quad x_i = 1$$
$$\Rightarrow r^N \frac{1}{dl} = 1$$
$$\text{d'où } N = \frac{\log dl}{\log r}$$

Ainsi, plus *r* sera faible et plus *N* sera élevé. Or, il est intéressant d'avoir un *r* faible, de manière à garantir une progression plus lente dans l'espace des fréquences, et un *N* faible afin d'obtenir un minimum d'opérations à effectuer en parallèle.

Dans le cadre d'une génération d'images texturées vidéo 4/3, on peut prendre : *N* = 5 et *r* = 2.

On décrira maintenant avec référence à la figure 3, l'étape de génération d'un motif. Dans cette étape, on reçoit en entrée la fonction fractale F*0* générée lors de l'étape de génération de texture microscopique et on obtient en sortie l'image d'une texture "à plat", c'est-à-dire d'une image non plaquée sur une surface. Cette étape permet de dessiner le motif macroscopique de la texture, de dupliquer le motif microscopique de la texture, d'introduire la fonction fractale comme bruit de phase sur le motif, d'introduire la fonction fractale comme bruit additif sur l'image, de réaliser le tissage de deux motifs de fils et aussi de gérer la couleur.

Comme mentionné ci-dessus, une texture peut être considérée sous une forme macroscopique et microscopique. Pour générer une texture macroscopique, on utilise en général une primitive. L'étape ci-dessus permet l'agencement de deux primitives appelées $P_1$ et $P_2$ qui pourront être par exemple celles d'une peau de reptile ou les deux fils d'un tissu. Pour obtenir une texture de type macroscopique, ces primitives peuvent être dupliquées dans l'image en *x* et en *y*. La structure microscopique de la texture ainsi que les variations d'aspect des primitives sont obtenues en introduisant la fonction fractale *F0* issue de l'étape précédente sous forme de bruit corrélé sur le phasage des primitives ou sous forme de bruit corrélé sur l'image. Les deux primitives $P_1$ et $P_2$ peuvent avoir des valeurs identiques dans le cas de l'utilisation d'une seule primitive ou avoir des valeurs neutres si l'on souhaite faire prédominer l'aspect fractal.

Dans le procédé de la présente invention, on utilise la fonction spline décrite ci-dessus pour calculer les primitives $P_1$ et $P_2$. Comme représenté sur la figure 3, chaque primitive est caractérisée par *Npt* que l'on interpole en fonction des duplicats par la fonction B-spline. Ainsi, le schéma A de la figure 3 représente les *Npt* points caractérisant $P_1$, le schéma B les *Npt* points caractérisant $P_2$ et le schéma C la structure macroscopique obtenue par duplication des motifs $P_1$ et $P_2$. De manière plus générale, on utilise les fonctions ci-après pour réaliser une texture macroscopique.

Soit $Spln_1 0$ la fonction $Spln_0$ avec le tableau de points $P_1$ et $Spln_{20}$ la fonction $Spln_0$ avec le tableau de points $P_2$. Alors, on définit les fonctions $M_1$ et $M_2$ :

$$M_1 (x,y) = Spln_1 \; (r_x x + dp_x F(x, y), \; r_y y + dp_y F(x, y))$$

$$M_2 (x,y) = Spln2 (r_x x + dp_x F(x,y), \; r_y y + dp_y F(x,y))$$

avec $r_x$ et $r_y$ : coefficients de duplication des motifs en *x* et *y* respectivement ;

$dp_x$ et $dp_y$ : coefficients de déphasage des motifs en *x* et *y* respectivement ;

$F(x,y)$ : valeur de la fonction fractale au point (x,y).

$M_1(x,y)$ est la valeur au point (x,y) du motif $P_1$ dupliqué $r_x$ fois en *x*, $r_y$ en *y* et déphasé de $dp_x x F(x,y)$ en *x* et $dp_y \times F(x,y)$ en *y*. De même, $M_2(x,y)$ est la valeur au point *(x,y)* du motif $P_2$ dupliqué $r_x$ fois en *x*, $r_y$ en *y* et déphasé de $dp_x \times F(x,y)$ en *x* et $dp_y \times F(x,y)$ en *y*.

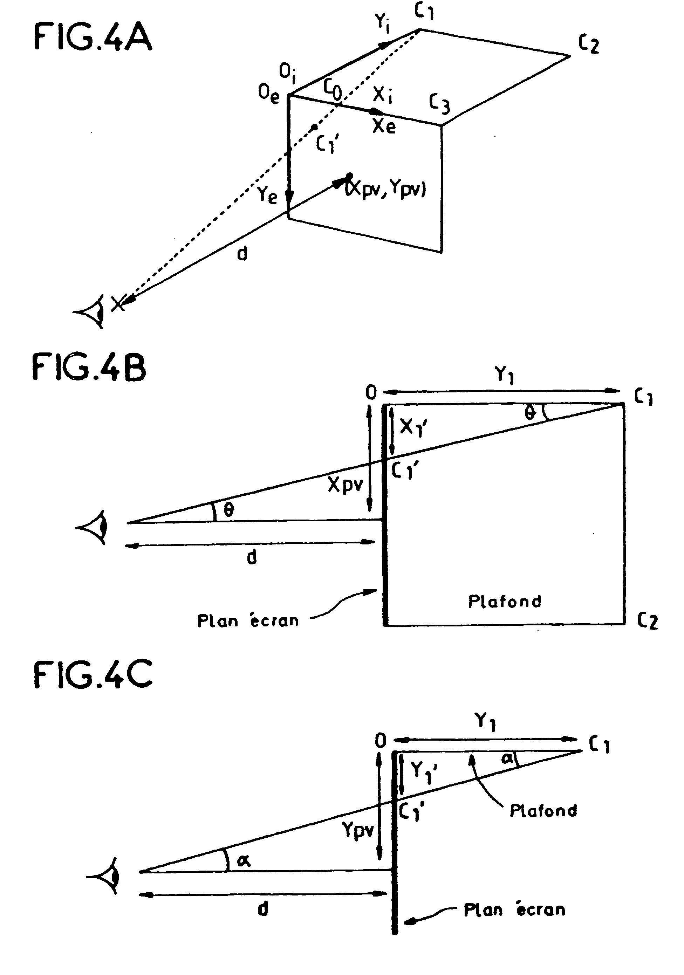

A partir de cette étape de génération de motifs, on peut réaliser un placage ou "mapping" de la texture microscopique ou macroscopique obtenue sur une surface. Ce placage est obtenue en réalisant une étape de ré-échantillonnage. Le ré-échantillonnage est réalisé en utilisant de préférence une méthode connue appelée méthode "output to input". Cette méthode permet d'éviter les défauts de filtrage lorsque l'on calcule la transformation entres les pixels de deux images. La méthode utilisée, dans le présent cas, pour réaliser le placage d'une texture sur une surface plane telle qu'un sol, un plafond, un mur, ...etc, sera expliquée avec référence aux figures 4A à 4C. Dans le cas présent, il a été choisi d'effectuer une projection perspective de la surface texturée dans l'espace à trois dimensions (O,X,Y,Z) vers le plan de l'écran. De ce fait, il est nécessaire d'effectuer les opérations suivantes:

. positionner la surface plane texturée dans l'espace ;

. positionner l'écran de visualisation dans l'espace ;

. positionner le point de visualisation qui servira de point de convergence dans l'espace.

A titre d'exemple et avec référence aux figures 4A à 4C, on détaillera les calculs des coordonnées du point de visualisation et de la transformation pour un placage d'une texture sur un plafond. Cette technique de positionnement des objets de projection perspective par rapport au point de visualisation est dérivée de la méthode bien connue en synthèse d'image appelé lancé de rayons. Les autres plans pourront être obtenus par des calculs similaires ou par rotation par rapport au centre du plan écran.

Comme représenté sur la figure 4A, on adopte les notations suivantes :

$(O_i, X_i, Y_i)$ est le plan de la surface texturée initiale. Celle-ci a les dimensions d'une image et elle provient de l'étape de génération du motif, c'est-à-dire que dans ce repère le point $C_0$ a les coordonnées $(O,O)$, $C_1$ $(O,L\text{-}1)$, $C_2$ $(W\text{-}1,L\text{-}1)$ et $C_3$ $(W\text{-}1,0)$.

$(O_e, X_e, Y_e)$ est le plan de l'écran.

$(Xp_v, Y_{pv})$ est la projection normale au plan $(O_e, X_e, Y_e)$ du point de visualisation. $d$ est la distance entre le point de visualisation et le point $(X_{pv}, Y_{pv})$.

$C_1'(X1', Y1')$ est la projection perspective de $C_1$ $(X1, Y1)$ sur le plan écran relativement au point de visualisation et $C_0'$, $C_1'$, $C_2'$, $C_3'$ les projections respectives de $C_0$, $C_1$, $C_2$, $C_3$.

Les images texturées et écran sont positionnés tels que le plan de l'écran coïncide avec la face avant du volume symbolisant le studio, par exemple, alors :

$$C_0' = C_0$$
$$C_3' = C_3$$

$C_1'$ et $C_2'$ sont symétriques par rapport à l'axe qui coupe verticalement l'écran en son milieu.

Le point $(X_{pv}, Y_{pv})$ est situé sur l'axe qui coupe verticalement l'écran en son milieu, l'observateur se trouvant sur un axe perpendiculaire à l'axe qui coupe verticalement l'écran en son milieu.

Il faut alors obtenir $Y_{pv}$, $d$ et la relation qui lit les points projetés sur $(O_e, X_e, Y_e)$ et ceux du plan $(O_i, X_i, Y_i)$.

A partir de la vue de dessus représentée sur la figure 4B, on peut déduire les relations sur les angles suivantes :

$$\frac{X_{pv} - X'_1}{d} = \frac{X'_1}{Y_1}$$

$$\Rightarrow d = \frac{Y1(X_{pv} - X'_1)}{X'_1}$$

De même à partir de la vue de côté représentée sur la figure 4C, on peut déduire la relation suivante :

$$\frac{Y_{pv} - Y'_1}{d} = \frac{Y'_1}{Y_1}$$

$$\Rightarrow Y_{pv} = \frac{dY'_1}{Y_1} + Y'_1$$

De plus, pour un point $(X', Y')$ de l'écran compris dans le trapèze $(C_0', C_1', C_2', C_3')$, on calcule les coordonnées du point source $(X,Y)$ du plan texturé grâce au système suivant :

$$\frac{Y'}{Y} = \frac{Y_{pv} - Y'}{d}$$

$$\frac{X_{pv} - X}{d + Y} = \frac{X_{pv} - X'}{d}$$

$$X = \frac{Y_{pv}(X'-X_{pv})}{Y_{pv}-Y'}+X_{pv} \tag{4}$$

$$Y = \frac{dY'}{Y_{pv}-Y} \tag{5}$$

En plus de la réalisation du plaquage de l'image texturée sur une surface, il est aussi possible d'ajouter un effet de profondeur. Cet effet est obtenu par atténuation de la luminosité du point de la surface en fonction de sa distance par rapport au point de visualisation. Il est connu que l'intensité de réflexion diffuse est donnée par :

$$I = I_i \cdot k_d \cos \tau$$

avec:

    $I_i$ = intensité lumineuse incidente
    $k_d$ = coefficient de réflextivité de la surface et
    $\cos\tau$ est égal au produit scalaire entre le vecteur rayon incident $I$ et $n$ la normale à la surface au point $P$.

De ce fait, l'intensité de la lumière diffuse décroît de façon inversement proportionnelle au carré de la distance $S_{pv}$ entre la surface et le point de visualisation. Cette distance s'exprime comme suit :

$$dist_{SPV} = \sqrt{(d + Y)^2 + Y_{pv}^2 + (X_v - X)^2}$$

Pour mieux faire percevoir l'effet de profondeur, il est préférable de faire prédominer l'atténuation de la luminosité sur la profondeur de la surface, à savoir les termes en $Y$ par rapport à l'atténuation latérale de la luminosité. Pour cela, on peut négliger les termes en $X$ par rapport aux termes en $Y$. En exprimant $X$ en fonction de $Y'$ tel que définit ci-dessus dans la fonction $dist_{SPV}$ et avec la simplification précédente, on obtient la formule d'atténuation en fonction des $Y'$ ci-après :

$$\text{atténuation } (Y') = \frac{C.(Y_{pv} - Y')^2}{Y_{pv}^2.(d^2 + (Y_{pv} - Y')^2)}$$

    avec $C$ : constante de normalisation.

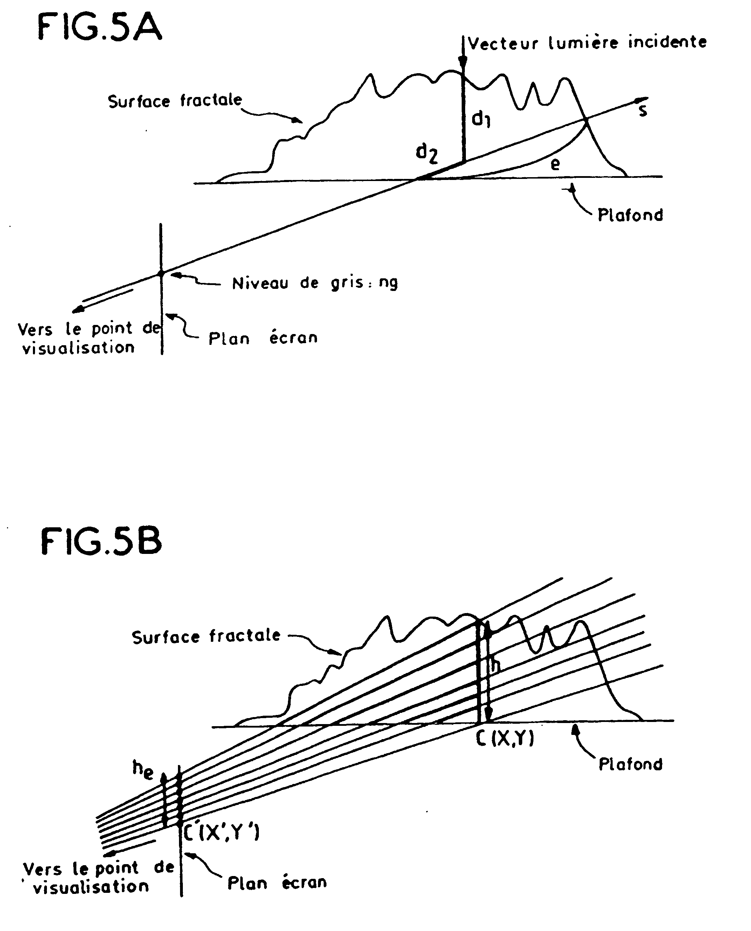

Selon une caractéristique supplémentaire de la présente invention, on peut réaliser à l'aide des éléments obtenus en sortie de l'étape de ré-échantillonnage, la mise en relief des nuages, l'étapes de ré-échantillonnage donnant une image de synthèse représentant, par exemple, un plafond nuageux avec prise en compte de l'absorption de la lumière. Au niveau du ré-échantillonnage, on prend en entrée une image obtenue en sortie de l'étape de génération de motifs qui a les caractéristiques d'une surface fractale. A chaque pixel de cette image, on associe une épaisseur proportionnelle à la valeur du pixel. L'image fractale provenant de l'étape de génération de motifs va servir à générer un volume dont la surface sera fractale. Ce volume est alors positionné dans l'espace ($O$, X, $Y$, Z) comme le plafond décrit ci-dessus. Dans ce cas aussi, la technique de calcul est dérivée du lancé de rayon comme décrit pour le plaquage d'une image texturée sur une surface. Cette étape est représentée en particulier aux figures 5A et 5B.

Sur la figure 5A, le niveau de gris noté $ng$ est en fait proportionnel à l'absorption de la lumière à travers le nuage et peut être donné par la formule ci-après :

$$ng \text{ est proportionnel à } \int_{0}^{\epsilon} (\alpha.d_1(s) + \beta.d_2(s))ds$$

    avec $\alpha$ et $\beta$ : constantes de normalisation

Une manière de résoudre l'expression ci-dessus consiste à discrétiser l'intégrale pour la transformer en une somme que l'on évalue au fur et à mesure du balayage des pixels, comme représenté sur la figure 5B. On travaille alors colonne par colonne en commençant par les points de la ligne d'horizon vers les points du haut de l'écran. Pour chaque pixel $C'$ de l'écran, on calcule les coordonnées de son point source $C$ sur le plan texturé comme décrit ci-dessus. La valeur de l'image fractale en $C$ donne alors l'épaisseur du nuage $h$. On calcule ensuite la projection de la hauteur $h$ sur l'écran $h_e$ afin de connaître le nombre de pixels de l'écran qui seront affectés par l'absorption de la lumière pénètrant à la verticale de C.

$$h_e = \frac{h.(Y_{pv} - Y')}{Y_{pv}}$$

Considérons le segment de l'écran $[(X',\ Y'),\ (X',\ Y' - h_e)]$. Alors pour chaque point $C''$ $(X',\ T')$ (avec $Y'' \in [Y',\ Y' - h_e])$ du segment on calcule le terme :

$$\Delta ng = exp\ (\alpha\ .\ d_1\ (Y',\ Y'',\ h) + \beta\ .\ d_2\ (Y',\ Y'',\ h))$$

Le terme obtenu est alors additionné à la valeur du pixel $C''$. Ainsi, au fur et à mesure que l'on monte de la ligne d'horizon vers le haut de l'écran, plusieurs termes $\Delta ng$ sont calculés en $C''$ et se mettent à la valeur du pixel. On obtient de cette façon une approximation de la fonction exponentielle dont le résultat visuel est tout à fait satisfaisant.

Le terme $\Delta ng$ calculé en $C''$ reste cependant complexe car il fait appel à la fonction *(exp)* et au calcul de $\alpha\ .\ d_1 + \beta\ .d_2$ donné par l'expression ci-après :

$$\alpha\ .\ d_1\ (Y',Y'',h) + \beta\ .\ d_2\ (Y',\ Y'',h) =$$

$$\beta h + \frac{Y_{pv}\ (Y - Y'')}{Y_{pv} - Y'}[\alpha\ \sqrt{1 + \frac{d^2}{(Y_{pv} - Y'')^2}} - \beta]$$

Pour pouvoir implémenter matériellement la fonction (*exp*), on crée un tableau (*exp*[ ]) dont la taille peut être pré-définie. Pour simplifier, nous avons limité ce tableau à 1024 valeurs sans observer d'altération. Dans ce cas, $\alpha\ .\ d_1 + \beta\ .\ d_2$ devient alors l'indice du tableau $exp$[ ] avec des coefficients normalisateurs $\alpha$ et $\beta$ permettant un échelon-nement des valeurs de $\alpha\ d_1 + \beta\ d_2$ sur la plage entière [0-1023].

En plus des opérations ci-dessus, qui fournissent des images en luminance codées sur 10 bits ou 12 bits, il est possible en sortie de l'étape de génération de motifs d'utiliser un bit supplémentaire de données par pixel pour préciser si le pixel reçoit la couleur du motif $P_1$ ou celle du motif $P_2$. Dans ce cas, pour chaque pixel, un bit sélectionne la LUT (Look Up Table) de couleurs et les 10 bits restant sont l'indice de la couleur.

On décrira maintenant l'application des différentes étapes décrites ci-dessus à la génération d'une image TV de 720 x 576 ou 4:2:2.

Pour une image TV de format 720 x 576, l'on a : $L$ = 576 et $W$ = 720. Ceci amène à choisir :

$Bl$ = 12, Bh=9
$Dl$ = 60, Dh = 64
$Npt$ = 130, $Nbc$ = 108.

Pour ce qui concerne les valeurs de $r$ et de $N$, on choisit de manière préférentielle le couple $r$ = 2 et $N$ = 5.

$r$ = 2 est la valeur optimale de $r$ pour mieux percevoir la fonction Spln se reproduire aux différents essais.

$r^{2k}$ : puissance de 2, les multiplications par les $r^{2k}$ se calculent par décalage sur les bits lors d'une implémentation dans un circuit.

$r$ = 2 $\Rightarrow$ $N$ = 5. Dans ce cas, six calculs de *Spln0* sont nécessaires pour obtenir *F0* en chaque pixel, ce qui reste raisonnable pour une implémentation dans un circuit intégré.

Pour chaque paramètre $H$, on peut précalculer rapidement les six termes multiplicatifs $r^{-kH}$ que l'on peut stocker dans un tableau appelé $C$[ ].

Basé sur les données ci-dessus, on trouvera ci-après les différents algorithmes pour le calcul de *F0*, pour la génération du motif, puis pour le ré-échantillonnage du motif sans ou avec mise en relief au format TV.

Algorithme du calcul de F() (cas d'une image 4:2:2):

Algorithme du calcul de F() (cas d'une image 4:2:2):

• On considère le tableau P[] stocké et les U[], V[] et C[] pré-calculés.

POUR yi VARIANT de 0 à 575, FAIRE

POUR xi VARIANT de 0 à 719, FAIRE

$F = 0$;

POUR k VARIANT de 0 à 5 FAIRE

$x = xi * 2^k$;

$y = yi * 2^k$;

$indice\_u = x \bmod 60$;

$indice\_v = y \bmod 64$;

$indice\_p = [(x \, div \, 60) \bmod 12] + 12 * [(y \, div \, 64) \bmod 9]$;

$Spln = U[indice\_u] * P[indice\_p] * V[indice\_v]$;

$F = F + C[k] * Spln$;

fin_de_FAIRE

afficher F;

fin_de_FAIRE

fin_de_FAIRE

fin.

où mod est l'opérateur Modulo et div la division entière.

**EP 0 667 595 B1**

Algorithme de Génération du Motif (cas d'ine image 4:2:2):

<u>Algorithme de Génération du Motif (cas d'une image 4:2:2):</u>

*POUR yi VARIANT de 0 à 575, FAIRE*

    *POUR xi VARIANT de 0 à 719, FAIRE*

        $X = r_x*xi + dp_x*F(xi, yi);$

        $Y = r_y*yi + dp_y*F(xi, yi);$

        $M1 = Spln_1(X,Y);$

        $M2 = Spln_2(X,Y);$

        *SI ((M1 > Seuil) et (M2 > Seuil)) alors*

            *SI (Duplicat_Impaire(X,Y)) alors R = M1, Couleur = Couleur(1);*

            *SINON R = M2, Couleur = Couleur(2);*

            *Fin_de_SI_SINON*

        *SINON*

            *SI (M1> M2) alors R = M1, Couleur = Couleur(1);*

            *SINON R = M2, Couleur = Couleur(2);*

            *Fin_de_SI_SINON*

        *Fin_de_SI_SINON*

        $R = R + a * F(xi, yi);$

        *afficher R au pixel (xi, yi);*

    *fin_de_FAIRE*

*fin_de_FAIRE*

*fin.*

*où:*   *a est le coefficient de bruit corrélé additif,*

    *Couleur() est une fonction renvoyant la couleur du motif 1 ou du motif 2,*

    *Duplicat_Impaire() est fonction de test pour le tissage des échantillons*

11

Algorithme du calcul du Rééchantillonage (cas d'une image 4:2:2):

<u>Algorithme du calcul du Rééchantillonnage (cas d'une image 4:2:2):</u>

• *On considère les tableaux Y1[] et Y2[] pré-calculés ainsi que les valeurs $Y_{pv}$ et d.*

*POUR Y' VARIANT de 0 à 575, FAIRE*

*POUR X' VARIANT de 0 à 719, FAIRE*

*SI (Y' < $Y_1$') alors*

*Y = Y1[Y'];*

*X = Y2[Y'] \* (X' - $X_{vp}$) + $X_{vp}$;*

*SI ((X < 720) et (X > 0)) alors*

*Chercher sur le plan texturé le pixel (X,Y) et l'afficher sur l'ecran en (X',Y');*

*SINON afficher_fond(X',Y');*      */\* (X',Y') est à droite ou à gauche du trapèze ($C_0$',$C_1$',$C_2$',$C_3$') \*/*

*fin_de_SI_SINON*

*SINON afficher_fond(X',Y');*      */\* (X',Y') est en dessous du trapèze ($C_0$',$C_1$',$C_2$',$C_3$') \*/*

*fin_de_SI_SINON*

*fin_de_FAIRE*

*fin_de_FAIRE*

*fin.*

*afficher_fond(X',Y') affichera au pixel (X',Y') une valeur de fond.*

Algorithme du calcul du Rééchantillonage (cas d'une image (4:2:2):

Algorithme du calcul du Rééchantillonnage (cas d'une image 4:2:2):

• On considère les tableaux Y1[], Y2[], Y3[], attenuation[] et $d_3$[] pré-calculés ainsi que $Y_{pv}$ et d.

POUR X' VARIANT de 0 à 719, FAIRE

    POUR Y' VARIANT de 575 à 0, FAIRE

        SI (Y' < $Y_1$') alors

            Y = Y1[Y'];

            X = Y2[Y'] * (X' - $X_{vp}$) + $X_{vp}$;

            SI ((X < 720) et (X > 0)) alors

                h = valeur_pixel(image_texturée, X, Y);

                SI (Mise_en_relief) alors

                    $h_e$ = h * Y3[Y'];

                    adresse(expo[]) = adresse(exp[]) +βh;

                    POUR Y'' VARIANT de Y' à Y'-$h_e$, FAIRE

                        Δng = expo[$d_3$[Y', Y'']];      /* calcul de Δng */

                        ng = valeur_pixel(plan_écran, X', Y'');

                        ng = ng + Δng;       /* discrétisation de l'intégrale */

                        afficher(plan_écran, X', Y'', ng);

                  fin_de_FAIRE

                SINON afficher( plan_écran, X', Y', h*attenuation[Y']);   /* sans mise en relief */

                fin_de_SI_SINON

            SINON afficher(plan_écran, X', Y',valeur_fond);    /* (X',Y') est à droite ou à gauche du trapèze ($C_0$',$C_1$',$C_2$',$C_3$') */

            fin_de_SI_SINON

        SINON afficher(plan_écran, X', Y',valeur_fond);    /* (X',Y') est en dessous du trapèze ($C_0$',$C_1$',$C_2$',$C_3$') */

        fin_de_SI_SINON

    fin_de_FAIRE

fin_de_FAIRE

fin.

afficher(buffer, X',Y',val) affichera au pixel (X',Y') du plan ''buffer'' la valeur 'val'.

valeur_pixel(buffer, X, Y) renvoie la valeur au point (X, Y) du plan ''buffer''.

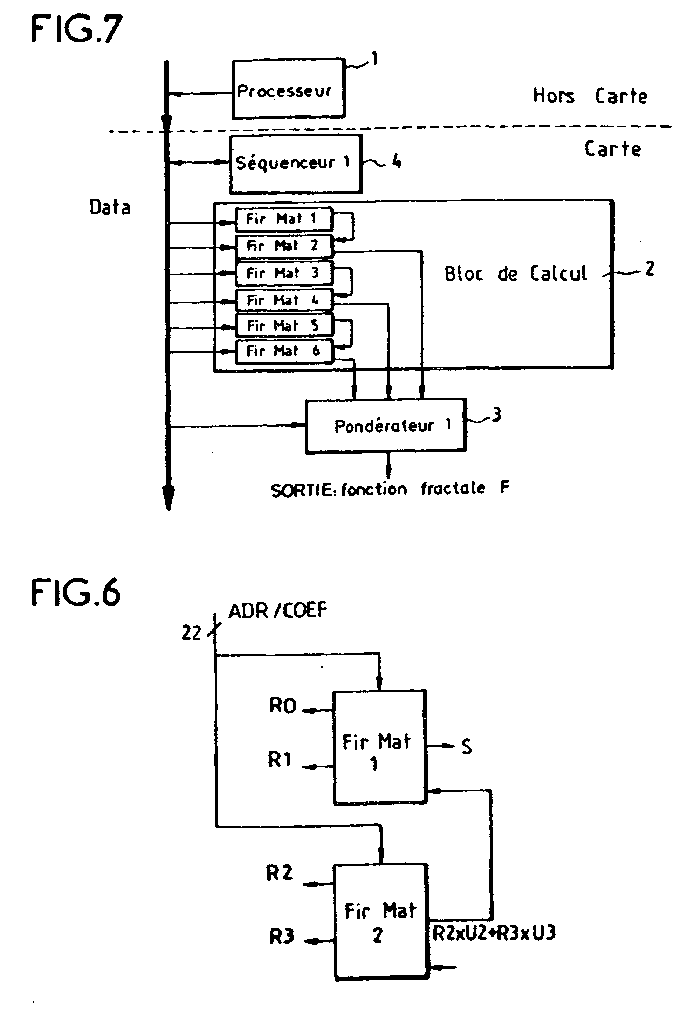

On décrira maintenant, plus particulièrement avec référence aux figures 6 à 17, un mode de réalisation du dispositif pour la mise en oeuvre du procédé décrit ci-dessus dans le cas où $r = 2$ et $N = 5$.

Dans ce cas, la fonction fractale $F(x,y)$ est telle que

$$F(x, y) = [r^0 \ Spln \ (x,y) + r^H \ Spln \ (r \ x, \ r \ y)] +$$

$$[r^{-2H} \ Spln \ (r^2 x, \ r^2 y) + r^{-3H} \ Spln \ (r^3 x, \ r^3 y)] +$$

$$[r^{-4H} Spln \ (r^4 x, \ r^4 y) + r^{-5H} \ Spln \ (r^5 x, \ r^5 y)]. \qquad\qquad -6)$$

Ainsi, pour le calcul de $Spln \ (r^k x, \ r^k y)$, il suffit de rapporter les valeurs du couple $(r^k x, \ r^k y)$ dans l'ensemble $[0, Bl]$ x$[0, Bh]$.

Sur la figure 6, on a représenté l'association de circuits spécifiques référencés ci-après FirMat permettant de réaliser notamment la fonction Spln(). Un premier circuit permet de réaliser un premier calcul matriciel, à savoir la multiplication de la matrice :

$[P_{00} \ P_{01} \ P_{02} \ P_{03}]$
$[P_{10} \ P_{11} \ P_{12} \ P_{13}]$
par le vecteur
$[X_0]$
$[X_1]$
$[X_2]$
$[X_3]$

Pour ce faire, les coefficients $P_{00} \ P_{01} \ P_{02} \ P_{03}$ et $P_{10} \ P_{11} \ P_{12} \ P_{13}$ sont stockés dans une mémoire RAM tandis que les valeurs des vecteurs $X_0 \ X_1 \ X_2 \ X_3$ peuvent être envoyées en entrée du circuit lui-même ou éventuellement stockées dans une autre mémoire RAM.

La valeur $X_0$ est tout d'abord multipliée dans un multiplicateur par $P_0$ et le résultat est stocké dans un registre $r_0$, de même $X_1$ est multiplié par $P_{01}$ et le résultat est stocké dans un registre $r_1$, $X_2$ est multiplié par $P_{02}$ et le résultat est stocké dans un registre $r_2$ et $X_3$ est multiplié par $P_{03}$ et le résulat est stocké dans un registre $r_3$. De même, $X_0$ est multiplié par $P_{10}$ le résultat étant stocké en $r'_0$, $X_1$ est multiplié par $P_{11}$ le résultat étant stocké en $r'_1$, $X_2$ est multiplié par $P_{12}$ le résultat étant stocké en $r'_2$, $X_3$ est multiplié par $P_{13}$ le résultat étant stocké en $r'_3$. Ensuite, les valeurs stockées dans $r_0$ et $r_1$ sont additionnées et stockées en $r''_1$ tandis que les valeurs stockées dans $r_2$ et $r_3$ sont additionnées et stockées en $r''_0$. L'ensemble des deux valeurs issues de $r''_0$ et $r''_1$ sont additionnées et stockées pour donner $R_0$. De même, les valeurs stockées en $r'_0$ et $r'_1$ sont additionnées et stockées dans le registre $r''_3$ tandis que les valeurs stockées dans $r'_2$ et $r'_3$ sont additionnées pour donner une valeur stockée en $r''_2$. Les valeurs stockées dans $r''_2$ et $r''_3$ sont alors additionnées pour donner la valeur $R_1$. Les valeurs $R_0$ et $R_1$ ainsi obtenues sont ensuite soumises à une multiplication. Dans ce cas $R_0$ est multiplié par le coefficient $Y_0$, la valeur obtenue étant stockée dans un registre $s_0$ et $R_1$ est multiplié par le coefficient $Y_1$, la valeur obtenue étant stockée dans un registre $s_1$ puis les valeurs stockées dans $s_0$ et $s_1$ sont additionnées pour donner la valeur S. Pour réaliser la fonction $Spln()$ donnée en (3), on utilise donc deux circuits agencés comme représenté sur la figure 6. Dans ce cas, le circuit FirMat 1 sort des valeurs $R_0$, $R_1$ et S et reçoit en entrée la valeur $R_2$ x $U_2$ + $R_3$ x $U_3$ issue du circuit FirMat 2. Le circuit FirMat 2 sort aussi les valeurs $R_3$ et $R_2$. Les deux circuits FirMat 1 et FirMat 2 reçoivent en entrée les adresses et coefficients $V_0$, $V_1$, $V_2$, $V_3$.issus notamment du processeur-utilisateur. Ainsi, les deux circuits FirMat cascadés comme représenté sur la figure 6 permettent de réaliser le calcul matriciel en décomposant l'équation (3) comme suit :

$$S = [U_0 \; U_1] \; \times \; \begin{bmatrix} P_{00} & P_{01} & P_{02} & P_{03} \\ P_{10} & P_{11} & P_{12} & P_{13} \end{bmatrix} \times \begin{bmatrix} V_0 \\ V_1 \\ V_2 \\ V_3 \end{bmatrix} \; + \; [U_2 \; U_3]$$

$$\times \; \begin{bmatrix} P_{20} & P_{21} & P_{22} & P_{23} \\ P_{30} & P_{31} & P_{32} & P_{33} \end{bmatrix} \; \times \; \begin{bmatrix} V_0 \\ V_1 \\ V_2 \\ V_3 \end{bmatrix}$$

Maintenant, on décrira en se référant plus particulièrement aux figures 7, 8, 9 et 10, un circuit de génération de la fonction fractale. La fonction fractale est générée en utilisant une partie circuitrie ou "Hardware" en langue anglaise référencée Carte sur la figure 7 et des données issues d'un processeur 1 dans la partie référencée Hors Carte sur la figure 7. De manière simplifiée, le circuit de génération de fonction fractale comporte un bloc de calcul 2 permettant de réaliser la fonction F(X, Y) donnée par la relation 4. Ce bloc de calcul est composé de six circuits FirMat comme représenté sur la figure.

Dans le générateur représenté à la figure 7, pour chaque pixel, chaque couple de circuits FirMat, à savoir FirMat 1 et FirMat 2 ; FirMat 3 et FirMat 4 ; FirMat 5 et FirMat 6 calculent deux termes *Spln()*. Les trois sorties de ces couples, issues respectivement de FirMat 2, FirMat 4 et FirMat 6, sont envoyées en entrée d'un pondérateur 3 qui sera décrit de manière plus détaillée ci-après. D'autre part, la partie "Hardware du générateur comporte un séquenceur 4 décrit lui aussi de manière plus détaillée ci-après. Les données envoyées en entrée du séquenceur, du pondérateur ainsi que du bloc de calcul de *Spln()* sont issues notamment d'un processeur 1 ainsi que de moyens externes comme déjà décrits ci-dessus. Comme représenté sur la figure 7, en sortie du pondérateur 3, l'on obtient la fonction fractale F.

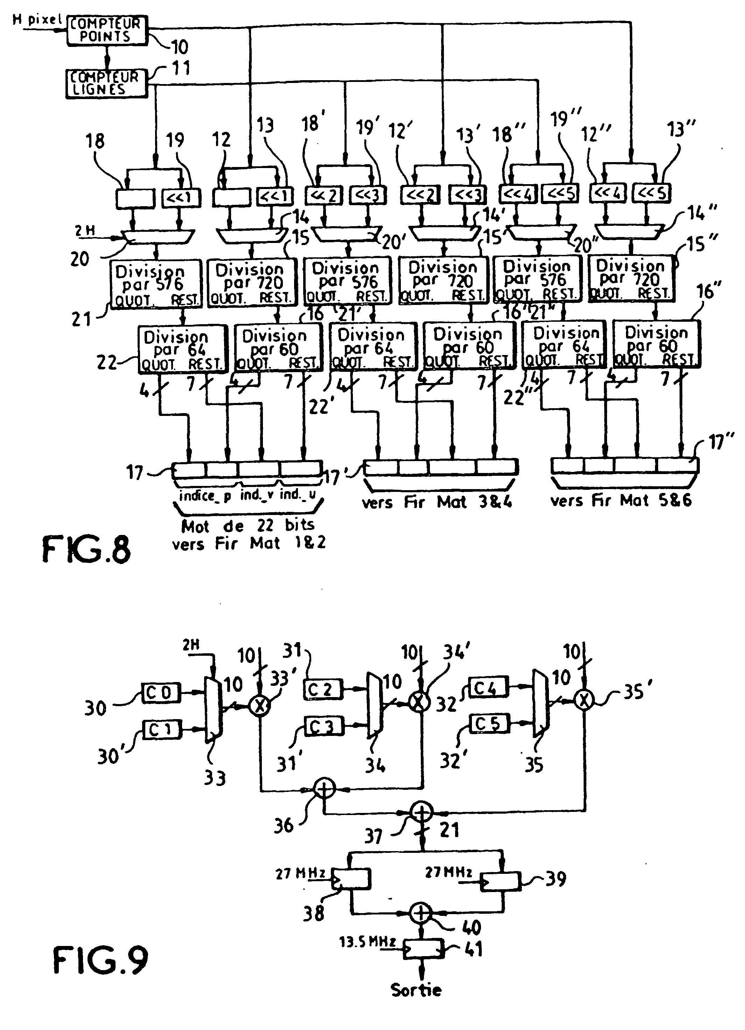

On décrira maintenant, de manière succinte, avec référence à la figure 8, un mode de réalisation du séquenceur 4. Le séquenceur 4 distribue à chaque couple de circuits FirMat dans le bloc de calcul 2, les paramètres u, v et p en fonction du pixel de l'image. Le séquenceur de la figure 8 est adapté au traitement d'une image TV de format 720 x 576 telle que définie ci-dessus dans laquelle la valeur du paramètre r a été fixé à 2. En conséquence, les multiplications par les $r^k$ s'effectuent par décalage à gauche sur les bits. Le séquenceur de la figure 8 comporte donc un compteur de points 10 comptant à la fréquence d'horloge H pixel et un compteur de lignes 11. La sortie du compteur de points 10 est envoyée en entrée de trois circuits de structure identique. Ainsi, chaque circuit est constitué de deux registres à décalage en parallèle 12, 13 ; 12', 13'; 12", 13". Le registre 12 reçoit la valeur issue du compteur de points 10 tandis que le registre 13 reçoit cette valeur décalée à gauche d'un bit ; le registre 12' reçoit cette valeur décalée à gauche de deux bits ; le registre 13' la valeur décalée à gauche de trois bits ; le registre 12" la valeur décalée à gauche de quatre bits ; le registre 13" la valeur décalée à gauche de cinq bits. Les valeurs stockées dans les registres 12 et 13 sont envoyées sur un multiplexeur 14. De même, les valeurs issues des registres 12' et 13' sont envoyées sur un multiplexeur 14'.et les valeurs issues des registres 12" et 13" sont envoyées sur un multiplexeur 14". Les multiplexeurs fonctionnent à la fréquence 2H. Les valeurs issues des multiplexeurs 14, 14' et 14" sont envoyées sur des diviseurs 15, 15' et 15" qui réalisent une division par 720. D'autre part, le reste de cette division est envoyée sur des diviseurs 16, 16' et 16" qui réalisent une division par 60. Le quotient de la division par 60 issu des diviseurs 16, 16', 16" est envoyé dans un registre 17, 17', 17" pour former une partie de l'indice p tandis que le reste des diviseurs 16, 16', 16" est envoyé respectivement sur les registres 17, 17', 17" pour former l'indice u. Une fois tous les points d'une ligne comptés, le compteur de points incrémente le compteur de lignes. Les sorties du compteur de lignes 11 sont envoyées sur trois circuits de structure identique, à savoir la sortie est envoyée respectivement sur un premier ensemble de deux registres 18, 19, la sortie sur un second ensemble de deux registres 18', 19', et sur un troisième ensemble de deux registres 18", 19". Ces registres sont des registres à décalage fonctionnant comme les registres 12, 13, 12', 13', 12", 13". De manière similaire, la sortie des deux registres à décalage 18 et 19 est envoyée sur un multiplexeur 20 fonctionnant à la fréquence 2H, la sorties des registres à décalage 18', 19' est envoyée en entrée d'un multiplexeur 20', et la sortie des registres 18", 19" en entrée d'un multiplexeur 20". La sortie des multiplexeurs 20, 20' et 20" est envoyée respectivement en entrée d'un diviseur 21, 21', 21" réalisant une division par 576. La sortie reste des diviseurs 21, 21', 21" est envoyée en entrée de diviseurs 22, 22', 22" réalisant la division par 64. Le quotient des diviseurs 22, 22', 22" est envoyé respectivement dans les registres 17, 17', 17" comme partie de l'indice p tandis que la sortie reste des diviseurs 22, 22' et 22" est envoyée respectivement dans les registres 17, 17' et 17" comme indice v. En fait, les termes u, v et p sont concatènés en adresse de 22 bits destinés aux couples de circuits FirMat du bloc de calcul 2 de la figure 7.

Maintenant on décrira avec référence plus particulièrement à la figure 2, un mode de réalisation du pondérateur 3 de la figure 7. Le pondérateur comporte des registres 30, 30', 31, 31', 32, 32' contenant respectivement les coefficients $C_0$, $C_1$, $C_2$, $C_3$, $C_4$, $C_5$ qui doivent être appliqués aux *Spln()* issus du bloc de calcul 2. De manière plus spécifique, les registres 30 et 30' sont connectés à un multiplexeur 33 fonctionnant à la fréquence 2H et la sortie du multiplexeur 33 est envoyée sur un multiplicateur 33' qui reçoit sur son autre entrée le terme Spline issu des circuits FirMat 1 et FirMat 2. De même, les registres 31 et 31' sont connectés à un multiplexeur 34 dont la sortie est envoyée sur un multiplicateur 34' qui reçoit le terme *Sph()* issu des circuits FirMat 3 et FirMat 4. Les registres 32 et 32' sont connectés en entrée d'un multiplexeur 35 dont la sortie est connectée sur un multiplicateur 35' qui reçoit sur son autre entrée le terme *Spln()* issu des circuits FirMat 5 et FirMat 6. Les résultats issus des multiplicateurs 33' et 34' sont additionnés dans un additionneur 36 dont la sortie est additionnée à la sortie du multiplicateur 35' dans un additionneur 37. Les résultats en sortie de l'additionneur 37 sont stockés dans un premier registre 38 pour un premier train de trois termes *Spln()* tandis que la sortie de l'addtionneur 37 est stockée dans un second registre 39 pour le second train de trois termes *Spln()*. Ces registres 38 et 39 fonctionnent à une fréquence de 27MHz. La sortie des registres 38 et 39 est envoyée sur un additionneur 40 dont la sortie est stockée dans un registre 41 fonctionnant à une fréquence de 13,5 MHz et donnant en sortie le résultat F à savoir la fonction fractale souhaitée.

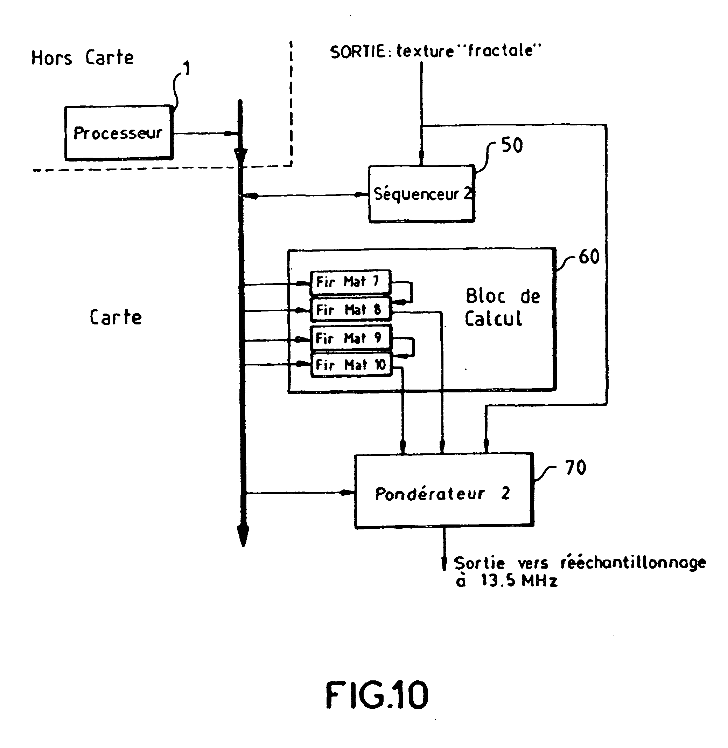

On décrira maintenant avec référence aux figures 10, 11 et 12, un dispositif permettant de générer le motif en utilisant le procédé décrit ci-dessus. Ce dispositif comporte une partie circuit ou "Hardware" référencée "Carte" sur la figure 10, et une partie permettant d'obtenir un certain nombre de données à partir du processeur 1, cette partie étant référencée "Hors Carte" sur la figure 10. La partie circuit comporte, comme représenté sur la figure 10, un séquenceur 50, un bloc de calcul 60 et un pondérateur 70. Le séquenceur 50 reçoit en entrée des paramètres provenant du processeur 1, les coordonnées d'un point provenant de compteurs de lignes et de points et la valeur de la fonction fractale F en ce point issu du circuit de génération de fonction Fractale. Le séquenceur 50 génère en sortie une adresse sur 22 bits destinée au bloc de calcul 60 qui génère les fonctions M1 et M2 telles que définies précédemment. Les valeurs de ces deux fonctions sont transmises simultanément en entrée du pondérateur 70 dont la sortie est envoyée vers un circuit de rééchantillonnage. Le bloc de calcul 60 représenté sur la figure 10 est constitué par quatre circuits FirMat référencés FirMat 7, FirMat 8, FirMat 9, FirMat 10 agencés deux par deux comme décrit avec référence à la figure 6. Ces quatre circuits FirMat permettent de réaliser les fonctions M1 et M2 : telles que

$$M_1 (x, y) = Spln_1(r_{xx} + dp_x F(x, y), r_y y + dp_y F (x, y))$$

$$M_2(x, y) = Spln2(r_{xx} + dp_x F(x, y), r_y y + dp_y F (x, y))$$

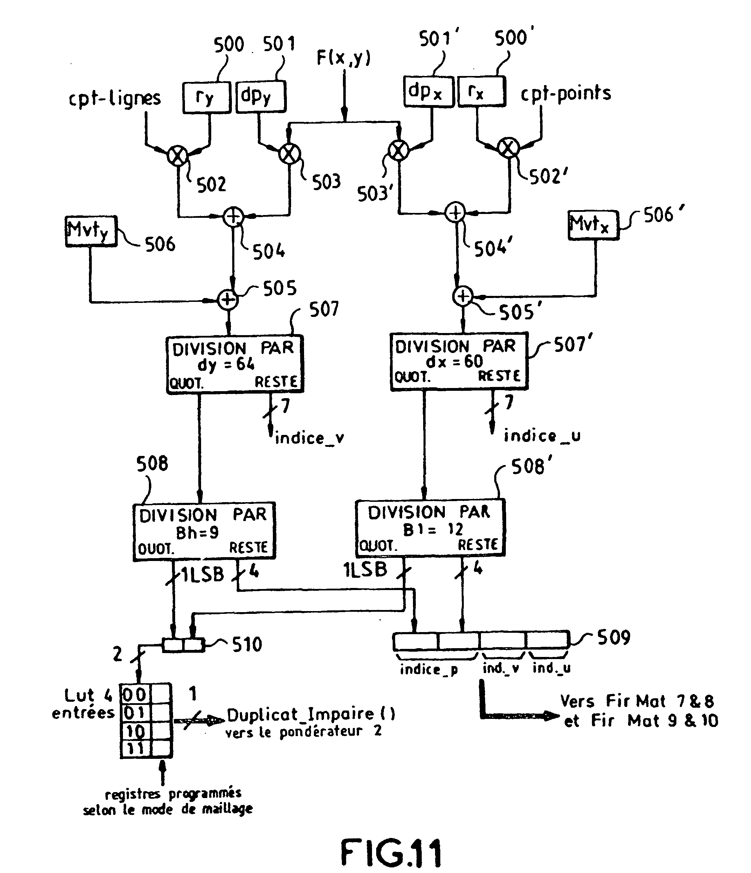

On décrira maintenant avec référence plus particulièrement à la figure 11, d'un mode de réalisation particulier du séquenceur 50. Le séquenceur 50 dans la figure 10 doit calculer l'adresse envoyée aux circuits FirMat afin d'évaluer les deux termes $Spln_1$ et $Spnl_2$. Pour cela, il considère les paramètres $r_x$, $r_y$ pour la duplication des motifs et $dp_x$, $dp_y$ pour le déphasage des motifs. Le séquenceur 50 comporte des registres 500 et 500' comportant respectivement les coefficients $r_x$. Il comporte aussi des registres 501 et 501' stockant les valeurs $dp_y$ et $dp_x$. Il comporte de plus des multiplicateurs 502, 502', 503, 503'. Le multiplicateur 502 effectue la multiplication de la valeur issue du compteur de lignes par la valeur $r_y$, et le multiplicateur 502' effectue la multiplication de la valeur $r_x$ par la valeur issue du compteur de points. Le multiplicateur 503 effectue la multiplication de la valeur $dp_y$ par la fonction fractale F (x,y) et le multiplicateur 503' effectue la multiplication de $dp_x$ par la fonction fractale F(x,y). D'autre part, les sorties des multiplicateurs 502 et 503 sont envoyées sur un additionneur 504 tandis que les sorties des multiplicateurs 502' et 503' sont envoyées sur un additionneur 504'. La sortie de l'additionneur 504 est envoyée sur un additioneur 505 qui reçoit sur son autre entrée une valeur Mvty stockée dans un registre 506 qui constitue un vecteur mouvement permettant le déplacement de la texture image par image. De manière identique, la valeur issue de l'additionneur 504' est additionnée dans un additionneur 505' à la valeur $Mvt_x$ stockée dans un registre 506'. La valeur obtenue en sortie de l'additionneur 505 est envoyée sur un diviseur 507 réalisant une division par 64 tandis que la valeur issue de l'additionneur 505' est envoyée dans un diviseur 507' réalisant une division par 60. Le reste de la division par 64 donne l'indice v tandis que le reste de la division par 60 donne l'indice u. D'autre part, le quotient obtenu en sortie du diviseur 507 est envoyé sur un diviseur 508 réalisant une division par 9 tandis que le quotient en sortie du diviseur 507' est envoyé sur un diviseur 508' réalisant une division par 12. Le reste de la division par 9 forme une première partie de l'indice p tandis que le reste de la division par 12 forme la seconde partie de l'indice p. L'adresse constituée par les indices p, v, u est envoyée vers les circuits FirMat 7 et 8 et FirMat 9 et 10. D'autre part, le quotient de la division par 9 et le quotient de la division par 12 sont stockés dans un registre 510 et sont envoyés sur des registres programmés permettant de donner la valeur Booléenne duplicat impaire envoyée vers le circuit pondérateur 70. On utilise dans ce cas une L.U.T. (look uptable) à 4 entrées programmée en fonction du type de maillage, les entrées sont les valeurs 00, 01, 10, 11 et les sorties sont fonction du maillage.

**EP 0 667 595 B1**

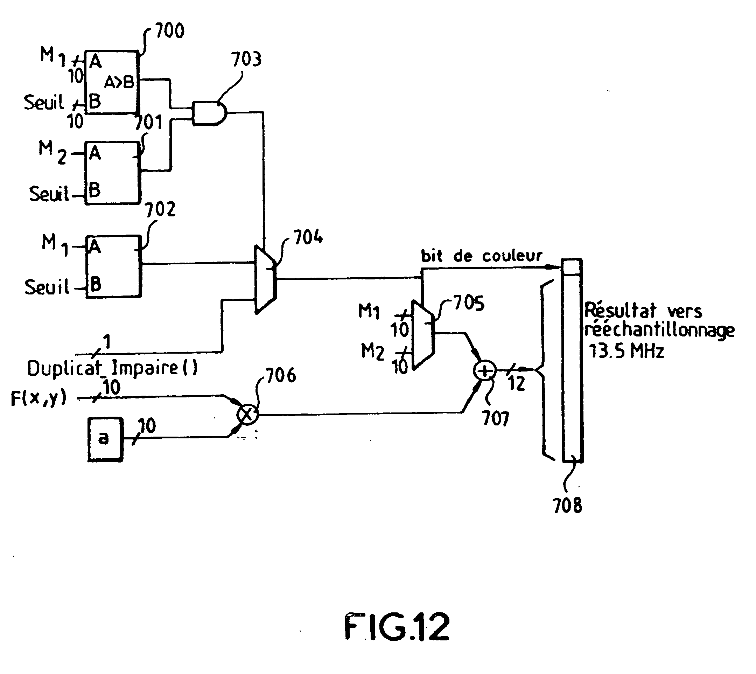

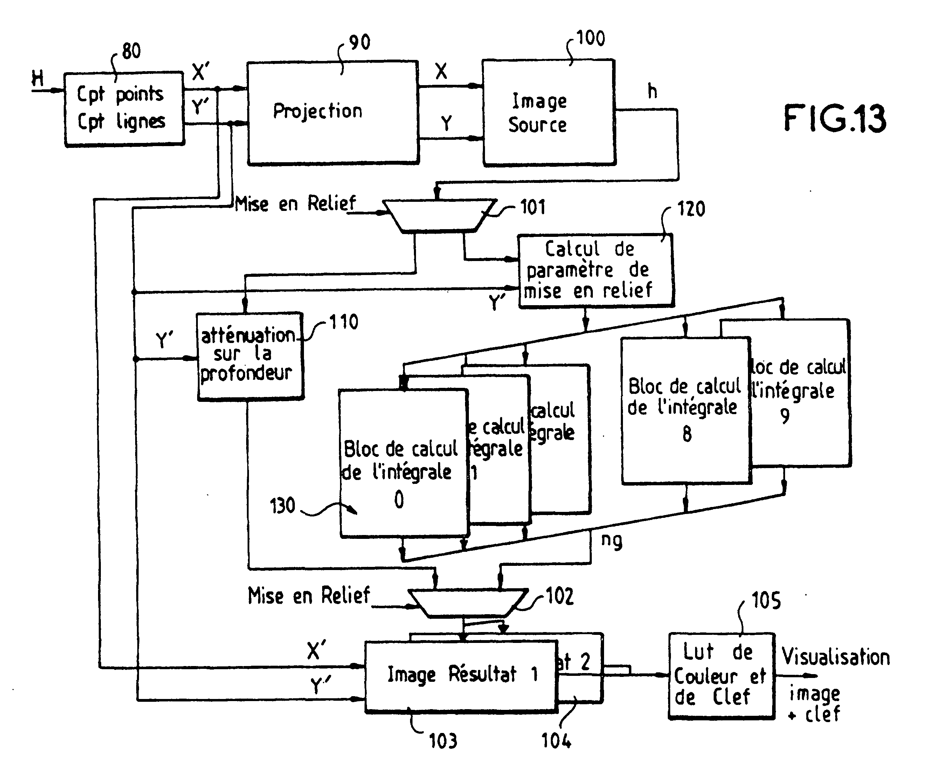

On décrira maintenant avec référence à la figure 13, un mode de réalisation du pondérateur 70. Ce pondérateur définit la texture en fonction des choix de l'utilisateur, à savoir choix du seuil, choix des motifs $P_1$ et $P_2$ décrit dans la description du procédé, choix éventuellement du mode de tissage. Comme représenté sur la figure 12, le pondérateur 70 comporte trois comparateurs 700, 701, 702. Le comparateur 700 compare la valeur $M_1$ issue du bloc de calcul 60 à un seuil. Le comparateur 701 compare la valeur $M_2$ issue du bloc de calcul 60 à un seuil. Le comparateur 702 compare les valeurs $M_1$ et $M_2$. De manière plus spécifique, la valeur $M_1$ est rentrée sur l'entrée A du comparateur 700 tandis que le seuil est rentré sur l'entrée B, la valeur $M_2$ est rentrée sur l'entrée A du comparateur 701 tandis que le seuil est rentrée sur l'entrée B et la valeur $M_1$ est rentrée sur le seuil du comparateur 702 tandis que la valeur $M_2$ est rentrée sur l'entrée B du comparateur 702, les trois comparateurs réalisant la comparaison A > B. Les sorties des comparateurs 700 et 701 sont envoyées sur un circuit ET 703. La sortie du comparateur 702 est envoyée sur une entrée d'un multiplexeur 704 qui reçoit sur son autre entrée l'information duplicat-Impaire() obtenue en sortie du séquenceur 50 comme décrit ci-dessus. Le multiplexeur 704 effectue l'aiguillage à une fréquence donnée par 703. La sortie du multiplexeur 704 est envoyée comme horloge sur un multiplexeur 705 qui reçoit en entrée les valeurs $M_1$ et $M_2$. D'autre part, la fonction fractale F(x,y) est multipliée dans un multiplicateur 706 par un coefficient a, la sortie du multiplicateur 706 est envoyée en entrée d'un additionneur 707 qui reçoit sur son autre entrée la sortie du multiplexeur 705. Le résultat de l'additionneur 707 est stocké dans un registre 708. Il sera envoyé vers le circuit de rééchantillonnage à une fréquence de 13,5MHz. Le registre 708 comporte de plus un bit supplémentaire destiné à prendre soit la couleur de $P_1$, soit la couleur de $P_2$.

On décrira maintenant avec référence aux figures 13 à 17, un mode de réalisation de l'étage de rééchantillonnage. Comme mentionné ci-dessus, l'étage de rééchantillonnage est destinée à plaquer la texture issue du module de génération de motifs sur un plan en perspective. La méthode utilisée est une méthode connue dite méthode "output to input". D'autre part, on remarquera que dans le système donnant les relations (4) et (5), Y est indépendant de X". Il est donc possible de précalculer dans un processeur, $Y_{pv}$ valeurs pour Y' variant de 0 à ($Y_{pv}$-1) et de les stocker dans un tableau $Y_1[\ ]$. De même, on peut précalculer dans un second tableau $Y_2[]$, les $Y_{pv}$ valeurs, $Y_{pv}/Y_{pv}$-Y' possibles de façon à ce que la recherche du point source (X,Y) d'un pixel (X', Y') du trapèze ($C_0'$, $C_1'$, $C_2'$, $C_3'$) reviennent aux calculs suivants :

$$X = Y2[Y'] \ . \ (X'-X_{pv}) + X_{pv}$$

$$Y = Y1 \ [Y']$$

En fonction des paramètre saisies en entrée par l'utilisateur, les tableaux $Y_1[]\ Y_2[]$ ainsi que d'autres tableaux $Y_3[]$ et $d_3[]$ utilisés lors de l'étape de rééchantillonnage sont précalculés sur le processeur et chargés dans des mémoires RAM durant la supression de trame. Dans l'étage de rééchantillonnage, à partir donc des coordonnées du point de l'image résultat (X', Y'), on calcule les coordonnées du point dans l'image source (Y,X). De ce fait, l'étage de rééchantillonnage représenté à la figure 13 comporte donc les compteurs de points et de lignes référencés 80 recevant en entrée une fréquence horloge H et donnant en sortie les coordonnées X' Y' du point de l'image résultat. Ces coordonnées sont entrées sur un circuit projection 90 qui sera décrit de manière plus détaillée ci-après, qui donne en sortie les coordonnées X,Y du point dans l'image source, cette image source étant stockée dans le circuit 100. Comme représenté sur la figure 13, la valeur du pixel (x,y) de l'image source peut être utilisée de deux façons. Ceci est obtenu en envoyant les données h issues du circuit 100 à travers un multiplexeur 101 qui est commandé par une impulsion de mise en relief et dont les deux sorties sont envoyées respectivement vers un circuit d'atténuation sur la profondeur 110 ou vers un circuit de calcul de paramètres de mise en relief 120. Ces circuits seront décrits de manière plus détaillée ci-après. Si l'on souhaite effectuer une mise en relief par exemple pour un nuage, la valeur du pixel devient l'épaisseur du nuage au point (X,Y). Le calcul de l'intégrale est alors réalisé en décomposant la boucle de discrétisation et en parallèlisant les opérations. Ceci est rendu possible en limitant la hauteur projetée $h_e$ de h sur l'écran à une valeur de 10. Ainsi, comme représenté sur la figure 13, on utilise 10 blocs de calcul de l'intégrale 130. Si l'on ne souhaite pas réaliser une mise en relief, la valeur du pixel (X,Y) issue de l'image source est envoyée sur le circuit d'atténuation de la profondeur 110. La sortie du circuit d'atténuation 110 est envoyée en entrée du multiplexeur 102 de même que la sortie des dix blocs de calcul d'intégrale 130, ce multiplexeur 102 est actionné par l'impulsion de mise en relief. La sortie du multiplexeur 102 est envoyée sur deux circuits de stockage d'images 103, 104. En effet, deux plans image résultat sont nécessaires, l'un étant calculé pendant que le second est affiché. Les valeurs des points du plan sont alors passées au travers d'une table 105 qui stocke les couleurs. Cette table 105 détermine donc les couleurs ainsi que la clé de découpe de la texture finale. Dans la présente invention, la clef est calculée par seuillage sur la luminance des pixels. Si la luminance d'un pixel est inférieure à une valeur seuil fixée par l'utilisateur, la clef du pixel sera égale à 64, au-dessus elle sera égale à 939.

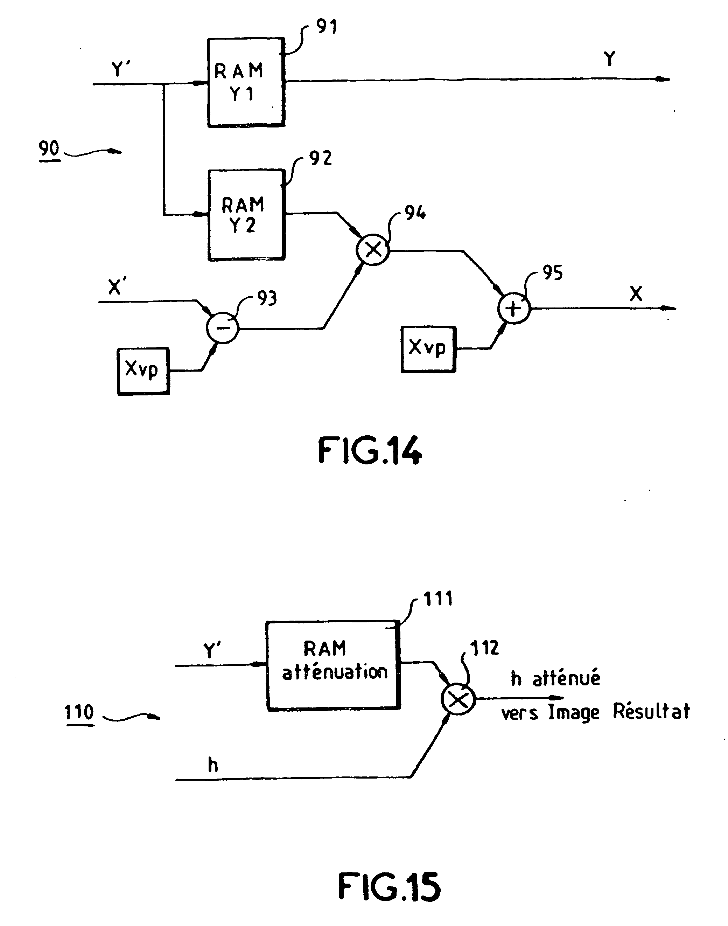

On décrira maintenant de manière plus détaillée, un mode de réalisation du circuit projection 90. Comme représenté sur la figure 14, le circuit projection 90 comporte donc deux mémoires RAM 91 et 92 stockant respectivement les tableaux $Y_1$ et $Y_2$ qui ont été précalculés comme mentionné ci-dessus. Les deux mémoires reçoivent comme adresse la valeur Y' du point. La mémoire 91 donne en sortie la valeur Y du pixel de l'image source tandis que la sortie de la mémoire 92 est envoyée en entrée d'un multiplicateur 94 qui reçoit sur son autre entrée la sortie d'un soustracteur 93. Le soustracteur 93 reçoit en entrée la valeur X' au point de l'image résultat ainsi que la valeur $X_{vp}$ telle que donnée ci-dessus lors de l'explication de la méthode de rééchantillonnage. D'autre part, la sortie du multiplicateur 94 est envoyée en entrée d'un additionneur 95 qui l'additionne à la valeur $X_{vp}$ et qui donne en sortie la coordonnée X du pixel de l'image source.

Comme mentionné ci-dessus, les valeurs Y' et X' proviennent d'un compteur de lignes et d'un compteur de points fonctionnant à la fréquence pixel H et de ce fait X et Y sont calculés à la fréquence pixel H.

On décrira maintenant, avec référence à la figure 15, un mode de réalisation possible pour le circuit d'atténuation sur la profondeur. Ce circuit 110 comporte essentiellement une mémoire RAM 111. Dans la mémoire RAM 111, on stocke les $Y_{pv}$ valeurs possibles pour la fonction atténuation. Pour chaque ligne Y', on sort de la mémoire RAM 111, la valeur atténuation souhaitée et on la multiplie dans le multiplicateur 112 à la valeur des pixels. issue de l'image source et référencée h, ce qui donne une valeur de pixels atténuée référencée h atténuée, envoyée vers le multiplexeur 102, puis vers l'image résultat.

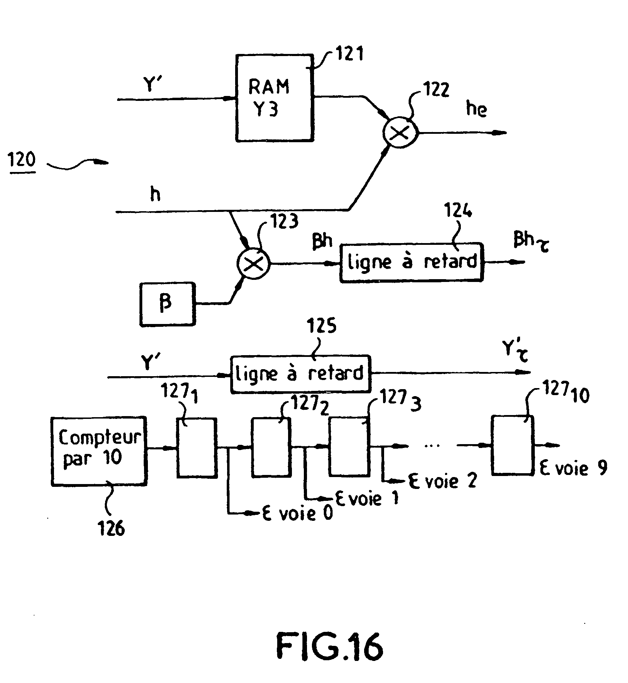

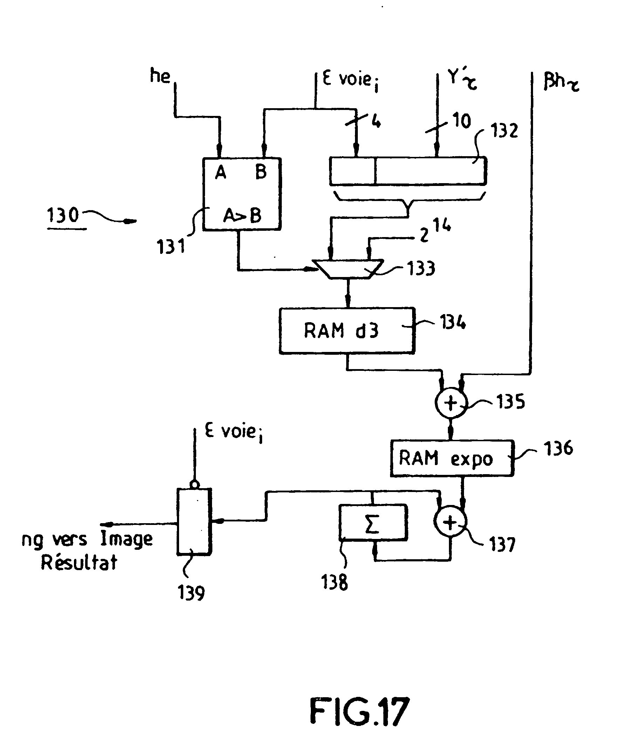

On décrira maintenant, avec référence à la figure 16, un bloc 120 de calcul des paramètres de mise en relief destiné à permettre la parallèlisation des opérations de discrétisation de l'intégrale telle qu'expliqué dans la méthode ci-desus. Les données he, $\beta H_\tau$ et $Y'_\tau$ sont communes à chaque bloc et sont transmises à la fréquence pixel H. En fait chaque bloc en parallèle calcule le paramètre ng pour un Y" situé entre Y' et Y' - he. Ce calcul ne s'effectue plus directement sur l'image résultat mais dans des registres tampons notés $\Sigma$ sur la figure 17. Le compteur par 10 est destiné à informer chaque bloc de la distance entre son point Y" et le point Y'. Lorsque cette distance notée $\varepsilon voie_i$, la valeur du registre $\Sigma$ est envoyée dans la mémoire résultat, car ce registre contient alors la valeur ng au point (X', Y'). Lorsque cette distance $\varepsilon voie_i$, est supérieure à he, cela signifie que Y" est inférieure à Y'-he et donc que la sommation ne peut plus être effectuée. Une valeur extrême est alors transmise en adresse de mémoire RAM d3 devant donner en sortie de la mémoire RAM expo 136 sur la figure 17, une valeur nulle. D'une manière plus spécifique, le circuit 120 comporte donc une mémoire RAM 121 stockant le tableau des valeurs $Y_3$ recevant comme adresse la valeur Y' et donnant en sortie la valeur $Y_3$ correspondante envoyée en entrée d'un multiplicateur 122 qui reçoit sur son autre entrée les coordonnées h du pixel de l'image et qui donne en sortie la valeur atténuée he. D'autre part, la valeur référencée h est envoyée sur un multiplicateur 123 qui reçoit sur son autre entrée un paramètre $\beta$ et qui donne en sortie la valeur $\beta h$ qui est stockée dans une ligne à retard 124 qui donne en sortie la valeur retardée $\beta h_\tau$. D'autre part, la valeur Y' est envoyée sur une ligne à retard 125 qui donne en sortie la valeur retardée $Y'_\tau$. De plus, le circuit 120 comporte un compteur par 10 (126) dont la sortie est connectée à des registres 127.1, 127.2, 127.3, ... $127_{10}$ monté en série. La sortie de chaque registre donne une valeur $\varepsilon voie_i$, i variant de 0 à 9. Cette valeur correspond à la distance entre le point courant Y" et le point courant Y' comme mentionné ci-dessus.

On décrira maintenant, avec référence à la figure 17, un mode de réalisation d'un circuit 130 référencé bloc de calcul de l'intégrale. Ce circuit 130 comporte donc un comparateur 131 réalisant la comparaison A > B et recevant sur son entrée A la valeur he issue du circuit de calcul de paramètre de mise en relief 120. Sur son entrée B, il reçoit la valeur $\varepsilon voie_i$ issue du même circuit 120. D'autre part, le circuit 130 comporte un registre 132 à 14 bits qui reçoit sur les 4 bits de poids forts, la valeur $\varepsilon voie_i$ issue du circuit 120 et la valeur $Y'_\tau$ sur les 10 bits de poids faibles issue aussi du circuit 120. La valeur issue du registre 132 ainsi que la valeur $2^{14}$ sont envoyées en entrée d'un multiplexeur 133 qui est actionné par la valeur issue du comparateur 131. La valeur en sortie du multiplexeur 133 est envoyée en adresse de la mémoire RAM d3 134 dont les valeurs ont été pré-calculées. La sortie de la mémoire RAM 134 ainsi que la valeur $\beta h_\tau$ issue du circuit sont envoyées en entrée d'un additionneur 135. La sortie de l'additionneur est envoyée comme adresse sur une mémoire RAM expo 136. La sortie de la mémoire 136 est envoyée sur un additionneur 137 qui reçoit sur son autre entrée la sortie d'un registre tampon $\Sigma$ 138. L'entrée du registre 138 est alimentée par la sortie de l'additionneur 137. La sortie du registre tampon 138 est aussi envoyée sur un registre 139 dont la sortie est actionnée de manière à envoyer la valeur obtenue vers l'image résultat lorsque $\varepsilon voie_i$ est égale à 0.

Les circuits décrits ci-dessus sont des exemples de réalisation permettant une mise en oeuvre facile du procédé conforme à la présente invention. Ils peuvent être modifiés de nombreuses façons comme cela est évident pour l'homme de l'art.

**Revendications**

1. Procédé de génération d'images texturées en vidéo, comportant une étape de génération d'une texture microscopique à partie de paramètres-utilisateur avec une fonction d'interpolation fractale générant un signal de type fBm « fractional Brownian motion », les images générées ayant une taille L x W, W étant le nombre de points par ligne et L le nombre de lignes actives, le procédé étant **caractérisé en ce qu'**on découpe l'image en Nbc = Bl x Bh blocs de taille dl x dh pixels, Bl représentant le nombre de blocs en largeur et Bh le nombre de blocs en hauteur, et on utilise une fonction fractale définie par :

$$F(x,y) = \sum_{k=0}^{N} r^{-kH} Sp\ln(r^k x, r^k y)$$

dans laquelle r > 1, r désignant la lacunarité ou facteur d'irrégularité,

H = (3-D) où D est la dimension fractale désirée,

$N$ est un paramètre fixé pour avoir une définition au pixel ou point-image près, et *Spln(x,y)* est l'interpolation par B-spline au point de coordonnées réelles *(x,y)* d'un maillage de points générés aux coordonnées entières, le domaine de définition de SplnO étant alors [0, Bl] x [0, Bh] et Spln ($r_k$x, $r_k y$) étant calculé en rapportant les valeurs du couple ($r^k$x, $r^k$y) dans l'ensemble [0, Bl] x [0, Bh].

**2.** Procédé selon la revendication 1, **caractérisé en ce que** les paramètres-utilisateur sont aléatoires ou déterministes.

**3.** Procédé selon l'une des revendications 1 ou 2, **caractérisé en ce que** la fonction B-spline est une fonction B-spline cubique.

**4.** Procédé selon l'une des revendications 1, 2 ou 3 **caractérisé en ce qu'**il comporte de plus une étape de génération d'un motif recevant en entrée l'image de la fonction fractale et des paramètres-utilisateur tels qu'obtenus par le procédé selon l'une quelconque des revendications 1 à 3 et donnant en sortie une texture macroscopique.

**5.** Procédé selon la revendication 4, **caractérisé en ce que** la texture macroscopique est obtenue en utilisant deux primitives P1, P2, chaque primitive étant **caractérisée par** Npt points interpolés par la fonction B-spline, la structure macroscopique étant obtenue par duplication des motifs des deux primitives P1, P2.

**6.** Procédé selon l'une quelconque des revendications 1 à 5, **caractérisé en ce qu'**il comporte de plus une étape de rééchantillonnage permettant de réaliser un placage ou « mapping » de l'image texturée sur une surface.

**7.** Procédé selon l'une quelconque des revendications 1 à 6, **caractérisé en ce qu'**on ajoute dans l'image un effet de profondeur en atténuant la luminosité du point de la surface en fonction de sa distance par rapport au point de visualisation.

**Patentansprüche**

**1.** Verfahren zur Erzeugung texturierter Videobilder, das eine Stufe zur Erzeugung einer mikroskopischen Textur, die von Benutzerparametern ausgehen mit einer fraktalen Interpolationsfunktion zur Erzeugung eines Signals vom Typ fBm "fractional Brownian motion", wobei die erzeugten Bilder eine Grösse L x W haben, wobei W der Anzahl von Punkten pro Linie und L der Anzahl der aktiven Linien entspricht, das Verfahren **dadurch gekennzeichnet ist, dass** das Bild in Nbc = B1 x Bh Blöcke mit der Grösse dl x dh Pixel aufgeteilt wird, wobei B1 die Anzahl von Blöcken in der Breite und Bh die Anzahl von Blöcken in der Höhe bedeuten und eine fraktale Funktion benutzt wird, die bestimmt wird durch:

$$F(x,y) = \sum_{K=0}^{N} r^{-kH} Spln(r^{kx}, r^{ky})$$

in der r > 1, r bezeichnet die Lückenhaftigkeit oder den Unregelmässigkeitsfaktor,

H = (3-D) wobei D die gewünschte fraktale Dimension ist,
*N* ist ein festgelegter Parameter, um eine Auflösung genau nach Pixel oder auf den Bildpunkt bezogen zu erhalten und Spln(xy) ist die Interpolation durch den B-Spline auf dem wirklichen Koordinatenpunkt (x, y) einer Vernetzung erzeugter Punkte auf ganzen Koordinaten, der Definitionsbereich von Spln0 ist dann [0, Bl] x [0, Bh] und Spln ($r_k$x, $r_k$y) berechnet wird, indem die Werte des Paares ($r^k$x, $r^k$y) in die Gesamtheit [0, Bl] x [0, Bh] eingebracht werden.

2. Verfahren nach Anspruch 1
   **dadurch gekennzeichnet, dass**
   die Benutzerparameter zufallsbedingt oder deterministisch sind.

3. Verfahren nach Anspruch 1 oder 2
   **dadurch gekennzeichnet, dass**
   die B-spline Funktion eine kubische B-spline Funktion darstellt.

4. Verfahren nach Anspruch 1, 2 oder 3
   **dadurch gekennzeichnet, dass**
   es zusätzlich einen Schritt zur Erzeugung eines Motivs beinhaltet, das am Eingang das Bild der fraktalen Funktion und der Benutzerparameter empfängt, wie sie mit dem Verfahren nach einem der Ansprüche 1 bis 3 erhalten werden und am Ausgang eine makroskopische Textur ergeben.

5. Verfahren nach Anspruch 4
   **dadurch gekennzeichnet, dass**
   die makroskopische Textur durch Benutzung von zwei Stammfunktionen P1, P2 erzielt wird, wobei jede Stammfunktion durch Npt Punkte gekennzeichnet ist, die durch die B-Spline-Funktion interpoliert wurden und die makroskopische Struktur durch Verdoppelung der Motive der beiden Stammfunktionen P1, P2 erzielt wird.

6. Verfahren nach einem der Ansprüche 1 bis 5
   **dadurch gekennzeichnet, dass**
   es zusätzlich einen Schritt zur Wiederholungsprobennahme enthält, die es ermöglicht ein Mapping des texturierten Bildes auf einer Fläche zu verwirklichen.

7. Verfahren nach einem der Ansprüche 1 bis 6
   **dadurch gekennzeichnet, dass**
   in das Bild einen Tiefeneffekt eingebracht wird, indem die Helligkeit des Punktes der Oberfläche entsprechend seiner Entfernung im Verhältnis zum Betrachtungspunkt abgeschwächt wird.

**Claims**

1. Procedure for generation of textured video images, including a stage for generation of a microscopic texture determined by user-defined parameters and based on a fractal interpolation function generating a fractional Brownian motion signal, the generated images having a size L x W, W being the number of points per line and L being the number of active lines, the procedure being **characterized in that** the image is divided into Nbc=Bl x Bh blocks of size dl x dh pixels, where integers Bl represents the number of blocks and width and Bh the number of blocks in height, and the fractal function is defined by:

$$F(x,y) = \sum_{k=0}^{N} r^{-kH} Spln(r^k x, r^k y)$$

where r > 1 being the lacunarity or irregularity factor
H=(3-D), where D is the required fractal dimension;
N is a parameter fixed so as to obtain a definition to within one pixel or image element and Spln(x,y) is the B-spline interpolation at a real point (x,y) in a grid of points generated with integer coordinates, the domain of definition of said function Spln( ) then being the set [0, Bl].x.[0, Bh] and Spln ($r^k$x, $r^k$y) being calculated by getting the values of the couple ($r^k$x, $r^k$y) inside the set [0,B] x [0,Bh].

**2.** Procedure according to claim 1, **characterized in that** the user-defined parameters are random or deterministic.

**3.** Procedure according to one of claim 1 or 2, **characterized in that** said function Spln( ) is a cubic B-spline function.

**4.** Procedure according to claim 1, 2 or 3, **characterized in that** it includes the stage of generating a pattern receiving at input the image of the fractal function and the user parameters such as obtained by the procedure according to one of the claims 1 to 3 and giving at output a macroscopic texture.

**5.** Procedure according to claim 4, **characterized in that** the macroscopic texture is obtained using two primitives P1, P2, each primitive being **characterized by** Npt points interpolated by a B-spline function, the macroscopic structure being obtained by duplicating the patterns given by the two primitives.

**6.** Procedure according to any one of claims 1 to 5, **characterized in that** it further includes re-sampling stage enabling a mapping of the textured image onto a surface.

**7.** Procedure according to any one of claims 1 to 6, **characterized in that** a depth effect is added to the image by attenuating the luminosity of points of the surface as a function of their distance from the display point.

# FIG.1

① 

②

N = 4 segments de longueur r = 1/3,
On a une dimension fractale D = 1.26...

③

FIG.2

FIG.3

**FIG.4A**

**FIG.4B**

**FIG.4C**

# FIG.5A

Vecteur lumière incidente

Surface fractale

$d_1$

$d_2$

s

e

Plafond

Niveau de gris : ng

Vers le point de visualisation

Plan écran

# FIG.5B

Surface fractale

h

C (X,Y)

Plafond

$h_e$

C'(X',Y')

Vers le point de visualisation

Plan écran

# FIG.7

Processeur — 1

Hors Carte

Carte

Séquenceur 1 — 4

Data

Fir Mat 1
Fir Mat 2
Fir Mat 3
Fir Mat 4
Fir Mat 5
Fir Mat 6

Bloc de Calcul — 2

Pondérateur 1 — 3

SORTIE: fonction fractale F

# FIG.6

ADR /COEF

22

R0
R1

Fir Mat 1 — S

R2

Fir Mat 2

R3

R2xU2+R3xU3

FIG.8

FIG.9

Hors Carte

Processeur 1

SORTIE: texture "fractale"

Séquenceur 2 50

Carte

Fir Mat 7
Fir Mat 8
Fir Mat 9
Fir Mat 10

Bloc de Calcul 60

Pondérateur 2 70

Sortie vers rééchantillonnage à 13.5 MHz

FIG.10

FIG.11

FIG.12

FIG.13

EP 0 667 595 B1

FIG.14

FIG.15

FIG.16

FIG.17